# DEMANDE DE BREVET EUROPEEN

(11) **EP 2 095 867 A1**
(43) Date de publication de la demande: **02.09.2009**
(21) Numéro de dépôt: 09354008.6
(22) Date de dépôt: 17.02.2009
(51) Int. Cl.: B01D 61/28

(54) **Dispositif de séparation de molécules et procédé de fabrication**

(30) Priorité: 28.02.2008 FR 0801098
(71) Demandeur: Commissariat à l'Energie Atomique, 75015 Paris (FR)
(72) Inventeur: Coiffic, Jean-Christophe, 38000 Grenoble (FR); Gaillard, Frédéric-Xavier, 38500 Voiron (FR); Puget, Pierre, 38330 Saint Ismier (FR)
(74) Mandataire: Jouvray, Marie-Andrée

(57) **Abrégé**

Une molécule est séparée d'un échantillon liquide contenant ladite molécule et au moins une molécule additionnelle ayant un diamètre hydrodynamique supérieur au diamètre hydrodynamique de la molécule à séparer, à l'aide d'un dispositif de séparation (1) comportant un substrat (2), au moins un canal de circulation (7) ménagé dans ledit substrat (2) et au moins un nanotube (3), associé à ladite molécule à séparer et formé sur une surface libre (2a) du substrat (2). La séparation est réalisée à l'aide du canal interne (4) d'un nanotube (3), tel qu'un nanotube de carbone, présentant un diamètre efficace choisi de manière prédéterminée et contrôlée. Le diamètre efficace du canal interne (4) est choisi pour être supérieur au diamètre hydrodynamique de la molécule à séparer et inférieur au diamètre hydrodynamique des molécules additionnelles de diamètres hydrodynamiques supérieurs.

## Description

### Domaine technique de l'invention

L'invention concerne un dispositif de séparation d'au moins une molécule d'un échantillon liquide contenant ladite molécule à séparer et au moins une molécule additionnelle ayant un diamètre hydrodynamique supérieur au diamètre hydrodynamique de la molécule à séparer.

L'invention concerne également un procédé de fabrication d'un dispositif de séparation.

### État de la technique

Les techniques de séparation ont toujours été importantes, en particulier dans le domaine de l'agriculture, de la préparation des aliments, de la métallurgie, de l'extraction de colorants, de parfums ou de principes actifs pour la médecine et la pharmacie.

Les techniques de séparation sont aujourd'hui utilisées non seulement pour produire des produits particuliers, mais aussi dans un but analytique ou pour acquérir de l'information sur la composition ou les propriétés d'un mélange.

Dans le domaine particulier de la biologie et de la santé, des enjeux primordiaux dépendent de la capacité à séparer des mélanges plus ou moins complexes.

À titre d'exemple, dans le domaine de la protéomique, discipline dont une des démarches expérimentales repose sur l'utilisation d'un spectromètre de masse pour identifier des protéines intéressantes (également appelées protéines d'intérêt), il peut être nécessaire de recourir préalablement à une ou plusieurs étapes de séparation, par exemple par électrophorèse sur gel d'acrylamide, sur gel mono- ou bidimensionnel ou par chromatographie liquide. Dans certains cas, le spectromètre de masse ne peut en effet pas traiter un échantillon biologique brut.

Le diagnostic de certaines maladies, comme le cancer, passe également par la détection et/ou la titration de certains marqueurs dans le sang. Ces marqueurs sont, en général, des protéines particulières et leur détection nécessite la mise en oeuvre d'un protocole d'analyse, dont les premières étapes consistent parfois en une ou plusieurs étapes de séparation.

De même, certaines thérapies reposent sur l'élimination et donc la séparation de certains composés toxiques qui s'accumulent dans le sang. C'est le cas en particulier des dialyses sanguines pour les patients atteints de diverses lésions des reins.

Or, un des besoins récurrents des outils d'analyse biologique réside dans leur capacité à traiter des échantillons de petite taille. En effet, dans le domaine du diagnostic, cela permet de prélever des échantillons de façon la moins invasive possible (échantillon sanguin par exemple, ou biopsie). Dans le cas de dépistage ou de traitement de cancers de plus en plus précoce, on peut également chercher à analyser des tumeurs ayant une taille de plus en plus petite. Dans le domaine de la recherche en sciences de la vie, il existe également un besoin pour étudier les propriétés de protéines présentes en très petites quantités ou présentes dans des cellules individualisées ou encore dans des organelles particulières.

Il existe de nombreuses techniques de séparation adaptées au traitement d'échantillons biologiques. Ces techniques s'appuient sur des principes physico-chimiques différents et pour chacun d'eux, les molécules traitées sont discriminées par des propriétés différentes. À titre d'exemple, les propriétés mises en oeuvre peuvent être les suivantes :
- la taille des molécules, qui conditionne non seulement la capacité desdites molécules à migrer à travers les pores d'une membrane, mais aussi la force de friction exercée par le milieu sur la molécule quand celle-ci est en mouvement, ainsi que la constante de diffusion de la molécule dans le milieu (ce qui conditionne son mouvement dit brownien),
- la charge électrostatique de la molécule. Les molécules biologiques sont en général des acides faibles (acides nucléiques, protéines formées d'acides aminés) qui sont ionisés à des degrés divers en fonction du pH de la solution. La charge des molécules d'intérêt varie donc en général en fonction du pH,
- un potentiel chimique qui traduit l'affinité des molécules d'intérêt pour une autre substance. Ces affinités peuvent reposer sur plusieurs types de forces intermoléculaires : interactions de Van der Waals, électrostatiques, hydrophiles/hydrophobes, stériques, entropiques. Les interactions biologiques spécifiques peuvent être considérées comme des combinaisons de toutes ces forces.
- la conformation et la dynamique de conformation de la molécule. Les molécules biologiques sont en général des poly- ou oligomères qui possèdent une conformation donnée plus ou moins figée. Dans certains milieux complexes (gels par exemple), à taille donnée, la capacité de certaines molécules à se reconfigurer spatialement peut leur permettre de se mouvoir plus ou moins facilement dans ces milieux.

Les techniques de séparation les plus courantes sont les différentes formes d'électrophorèse (sur gel mono ou bidimensionnel, capillaire), les différentes formes de chromatographie liquide, filtration, dialyse, centrifugation.

Cependant, certaines de ces techniques ne sont pas adaptées au traitement d'échantillons de très petite taille ou pour la séparation d'objets de taille inférieure à quelques dizaines de nanomètres (taille caractéristique d'une molécule). C'est par exemple le cas de la centrifugation.

Par conséquent, depuis plusieurs années, de nombreuses recherches ont consisté à réaliser des dispositifs de séparation à l'aide des techniques issues du domaine des micro- et nanotechnologies, afin de pouvoir traiter des échantillons de très petite taille ou volume. L'attrait de ces dispositifs réside, en particulier, dans la possibilité de réaliser des structures présentant des dimensions caractéristiques correspondant à la taille des molécules d'intérêt, et ceci de façon parfaitement contrôlée.

À titre d'exemple, Jan C. T. Eijkel et al. passent en revue, dans l'article « The promise of nanotechnology for separation devices-from a top-down approach to nature-inspired separation devices » (Elecrophoresis 2006,027, 677-685), les applications possibles des nanotechnologies pour optimiser les méthodes de séparation existantes et pour fournir de nouvelles méthodes. Jan C. T. Eijkel et al. décrivent, par exemple, des colonnes micro- et nano-structurées pour HPLC, des structures de tamis micro- et nano-structurées,...

Dans l'article « A patterned anisotropic nanofluidic sieving structure for continuous-flow separation of DNA and proteins » (nature nanotechnology, vol 2, Février 2007), Jianping Fu et al. rapportent la réalisation de structures tamis en deux dimensions par des techniques classiques en microélectronique, pour améliorer la vitesse et la résolution de la séparation de biomolécules. Les structures tamis sont réalisées par gravure dans un substrat en silicium à l'aide des techniques de photolithographie et de gravure ionique réactive (ou RIE pour « Reactive-lon Etching »), ce qui permet d'obtenir une topographie contrôlée avec une précision sub-micrométrique. Les structures tamis planes comprennent des canaux principaux, parallèles, de 1µm de largeur et de 300 nm de profondeur, connectés entre eux par des canaux latéraux de 1µm de largeur et de 55 nm de profondeur. Le mouvement des molécules, telles que des molécules d'ADN et de protéines, est créé par la superposition d'un champ électrique longitudinal selon les canaux principaux et un champ électrique latéral dans la direction des canaux latéraux, moins profonds que les canaux principaux. L'effet de séparation dans de telles structures vient du fait que des molécules différentes ont une probabilité différente de migrer d'un canal principal à un autre, par l'intermédiaire des canaux latéraux.

Dans l'article « Charge- and size-based separation of macromolecules using ultrathin silicon membranes » (Nature, Vol 445, 15 Février 2007), Christopher C. Striemer et al. présentent une membrane nanoporeuse ultrafine réalisée avec des procédés utilisés classiquement dans le domaine de la microélectronique. La taille moyenne des pores de la membrane est adaptée en faisant varier un paramètre de température pendant le procédé de fabrication.

Dans les cas d'une structure tamis ou d'une membrane nanoporeuse, la migration d'une molécule biologique dans un pore ou dans un canal est conditionnée non seulement par la taille du pore ou du canal mais aussi par le potentiel électrostatique appliqué aux parois délimitant le pore ou le canal. Or, dans ces deux cas, ce potentiel est statique, ce qui ne permet pas de contrôler dynamiquement la probabilité de passage. L'article « Field-effect control of protein transport in a nanofluidic transistor circuit » (Applied Physics Letters 88, 123114 (2006)) de Rohit Karnik et al. décrit une réalisation où, à la manière d'un transistor, un potentiel variable est appliqué à la surface d'un capillaire (celui-ci jouant le rôle du canal du transistor pour les porteurs). Les auteurs montrent qu'ils peuvent ainsi contrôler dynamiquement le passage de protéines dans le canal. Ce principe est applicable à condition que la taille du capillaire reste de l'ordre de la longueur de Debye à la surface des matériaux, c'est-à-dire inférieure à la dizaine de nanomètres.

Les dispositifs de séparation actuellement proposés dans les différentes études pour séparer des molécules biologiques présentent l'inconvénient majeur d'être difficilement industrialisables car coûteux à fabriquer. En effet, ils nécessitent l'utilisation d'étapes de lithographie qui se révèlent être très coûteuses pour réaliser des pores ou des canaux de dimension correspondant à la taille d'une molécule d'intérêt.

### Objet de l'invention

L'invention a pour but un dispositif de séparation simple, facile à mettre en oeuvre et permettant de séparer efficacement au moins une molécule d'un diamètre hydrodynamique inférieur ou égal à quelques centaines de nanomètres, en particulier une molécule biologique, d'un échantillon liquide contenant ladite molécule à séparer et au moins une molécule additionnelle ayant un diamètre hydrodynamique supérieur au diamètre hydrodynamique de la molécule à séparer.

Selon l'invention, ce but est atteint par le fait que le dispositif comporte:
- un substrat,
- au moins un canal de circulation ménagé dans ledit substrat
- et au moins un nanotube associé à ladite molécule à séparer et formé sur une surface libre du substrat, ledit nanotube comprenant un canal interne, débouchant dans ledit canal de circulation et présentant un diamètre efficace prédéterminé, supérieur au diamètre hydrodynamique de la molécule à séparer et inférieur au diamètre hydrodynamique de la molécule additionnelle.

L'invention a également pour but un procédé de réalisation d'un dispositif de séparation d'au moins une molécule d'un échantillon liquide contenant ladite molécule à séparer et au moins une molécule additionnelle ayant un diamètre hydrodynamique supérieur au diamètre hydrodynamique de la molécule à séparer, simple à mettre en oeuvre et bon marché.

Selon l'invention, ce but est atteint par le fait que le procédé comporte les étapes successives suivantes :
- formation contrôlée d'au moins un nanotube associé à ladite molécule à séparer, sur la surface libre d'un substrat constitué par un matériau dégradable sous l'action d'un agent chimique, ledit nanotube comprenant un canal interne présentant un diamètre efficace prédéterminé, supérieur au diamètre hydrodynamique de la molécule à séparer et inférieur au diamètre hydrodynamique de la molécule additionnelle,
- formation, sur la surface libre du substrat et sur la surface libre dudit nanotube, d'une couche mince imperméable à l'agent chimique
- et introduction de l'agent chimique dans le canal interne du nanotube et dégradation sélective d'une zone prédéterminée du substrat pour former un canal de circulation.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 à 7 représentent schématiquement et en coupe différentes étapes de réalisation d'un premier mode de réalisation d'un dispositif de séparation selon l'invention.
- la figure 8 représente schématiquement une vue en perspective du dispositif de séparation selon la figure 7.
- la figure 9 représente schématiquement et en coupe une variante de réalisation d'un dispositif de séparation selon la figure 7.
- la figure 10 représente schématiquement et en coupe un deuxième mode de réalisation d'un dispositif de séparation selon l'invention.
- la figure 11 représente schématiquement et en coupe un troisième mode de réalisation d'un dispositif de séparation selon l'invention.
- la figure 12 représente schématiquement et en coupe un quatrième mode de réalisation d'un dispositif de séparation selon l'invention.

### Description de modes particuliers de réalisation

Au moins une molécule, en particulier une molécule biologique, est séparée ou extraite d'un échantillon liquide contenant ladite molécule et au moins une molécule additionnelle ayant un diamètre hydrodynamique supérieur au diamètre hydrodynamique de la molécule à séparer, à l'aide d'un dispositif de séparation comportant :
- un substrat,
- au moins un canal de circulation ménagé dans ledit substrat
- et au moins un nanotube, associé à ladite molécule à séparer et formé sur une surface libre du substrat.

Le diamètre hydrodynamique (également noté Dh) correspond à la dimension (ou diamètre) de la molécule proprement dite additionnée à la longueur de Debye, notée λ_{D}. La longueur de Debye correspond à l'épaisseur de la double couche électrique entourant la molécule lorsque celle-ci est chargée. La longueur de Debye correspond en particulier à l'épaisseur du nuage de contre-ions équilibrant localement la charge d'une molécule lorsque celle-ci est chargée et contenue dans une solution tampon d'eau salée. Elle dépend des conditions de la solution comportant la ou les molécule(s), en particulier du type et de la concentration d'électrolyte(s) présent(s) et de la température.

La ou les molécules destinées à être séparées ou extraites d'un échantillon liquide ont, en général, un diamètre hydrodynamique (également noté Dh) de l'ordre de quelques dizaines de nanomètres et plus particulièrement compris entre 1nm et 1µm. À titre d'exemple, la ou les molécules à séparer d'un échantillon liquide peuvent être des molécules d'albumine de serum bovin (également noté BSA) d'un diamètre hydrodynamique Dh_{BSA} de 6,8nm et/ou des molécules d'immunoglobine (également notée IgG) d'un diamètre hydrodynamique Dh_{IgG} de 14nm.

La séparation est, plus particulièrement, réalisée à l'aide d'un canal formé par le canal interne d'un nanotube, tel qu'un nanotube de carbone formé sur la surface libre d'un substrat. Le canal interne du nanotube débouche, de plus, dans un canal de circulation.

Le canal interne du nanotube présente un diamètre efficace de, choisi de manière prédéterminée et contrôlée. Le diamètre efficace de du canal interne est défini par les formules suivantes :
- de = dᵣ - 2λ_{D}, où dᵣ correspond au diamètre réel du canal interne, c'est-à-dire le diamètre de la section délimitée par la paroi interne du nanotube) et λ_{D} correspond à la longueur de Debye, lorsque le nanotube et la molécule sont chargés électrostatiquement par des charges de même signe
- dₑ = dᵣ, dans les autres cas, en particulier lorsque le nanotube et la molécule sont de signes opposés ou lorsqu'ils ne sont pas chargés.

En effet, le diamètre efficace de du canal est choisi de manière à ne laisser passer que la molécule à laquelle il est associé et il est, plus particulièrement, choisi en fonction du diamètre hydrodynamique Dh de la molécule à séparer. Ainsi, il est supérieur au diamètre hydrodynamique de la molécule à séparer et inférieur à celui de la molécule additionnelle. Le diamètre efficace peut, avantageusement, être compris entre 1 nm et 100nm.

À titre d'exemple, un canal interne d'un nanotube ayant un diamètre efficace de 12nm permet d'extraire des molécules de BSA (Dh_{BSA} de 6,8nm) d'une solution contenant également des molécules IgG (Dh_{IgG} de 14nm).

De plus, le diamètre efficace de du canal interne, le diamètre hydrodynamique Dh d'une molécule et la relation entre les deux diamètres de et Dh dépendent de la charge électrostatique de la molécule et de celle du canal interne.

À titre d'exemple, un canal interne chargé positivement peut bloquer des molécules chargées positivement, si le diamètre efficace du canal interne, en prenant en compte la longueur de Debye, est supérieur au diamètre hydrodynamique de ladite molécule. Par contre, si le canal interne et la molécule sont chargés par des charges de signes opposés, il suffit que le diamètre hydrodynamique de la molécule soit inférieur au diamètre réel dᵣ du canal interne du nanotube.

Ainsi, la surface du canal interne peut, plus particulièrement, être fonctionnalisée pour être chargée électrostatiquement et de manière contrôlée, ce qui permet d'augmenter ou d'abaisser la probabilité de passage d'une molécule.

Par ailleurs, la charge électrostatique de la molécule dépend du pH de la solution. Ainsi, il est possible d'adapter le pH de la solution en fonction de la charge souhaitée pour la molécule, ce qui permet également d'augmenter ou de diminuer le passage de la molécule. À titre d'exemple, une molécule de BSA atteint à un pH égal à 7, une charge de 13e- et ne peut donc pas passer dans un canal interne de diamètre réel égal à 10nm et chargé négativement.

Selon l'utilisation du canal de circulation, celui-ci peut également comporter un orifice d'entrée et/ou un orifice de sortie afin de permettre la circulation de l'échantillon liquide ou bien l'évacuation de la molécule une fois celle-ci extraite.

La séparation peut, ainsi, être réalisée en injectant l'échantillon liquide dans le canal de circulation. Dans ce cas, seule la molécule à séparer ou à extraire peut passer dans le canal interne formé par le nanotube et être récupérée à l'extrémité libre du nanotube. De plus, le canal de circulation a une largeur et/ou une hauteur (ou bien un diamètre dans le cas d'un canal de circulation de section circulaire) supérieure ou égale au diamètre réel du canal interne du nanotube. Avantageusement, le canal de circulation a une largeur et/ou une hauteur inférieure ou égale à quelques centaines de micromètres et plus particulièrement comprises entre 5nm et 100µm.
Cependant, la valeur maximale de la largeur du canal de circulation n'est pas nécessairement critique. La largeur du canal de circulation peut, par exemple, être de plusieurs centimètres afin d'augmenter le débit, notamment pour des échantillons de très grand volume ou pour des séparations réalisées en continu. Dans une variante de réalisation, l'échantillon liquide peut être disposé sur la surface libre du substrat, à un niveau supérieur à celui correspondant à la hauteur du nanotube, afin de permettre l'entrée de la molécule associée au nanotube dans le canal interne de ce nanotube. La molécule extraite est, alors, évacuée par le canal de circulation.

Un dispositif de séparation comportant un canal, avantageusement de dimension nanométrique et formé par le canal interne d'un nanotube, tel qu'un nanotube de carbone, présente l'avantage d'être facile à mettre en oeuvre, tout en étant fiable et très efficace. En effet, les dimensions d'un tel canal interne sont parfaitement maîtrisées et contrôlées lors du procédé de fabrication du dispositif de séparation et, plus particulièrement, lors de la réalisation du nanotube. De plus, le dispositif de séparation peut être réalisé de manière reproductible. Au lieu de ne comporter qu'un seul nanotube, le dispositif peut également comporter une pluralité de nanotubes, ce qui permet la réalisation de séparations plus complexes, tout en conservant un dispositif très simple à réaliser. Le dispositif peut comporter des nanotubes ayant des canaux internes de diamètres réels identiques et/ou des canaux internes de diamètres réels différents afin de séparer des molécules différentes.

Un tel dispositif est, avantageusement, réalisé par un procédé de fabrication simple et rapide à mettre en oeuvre, associant la formation contrôlée d'au moins un nanotube de carbone et l'utilisation du canal interne du nanotube de carbone formé pour réaliser, dans le substrat, le canal de circulation.

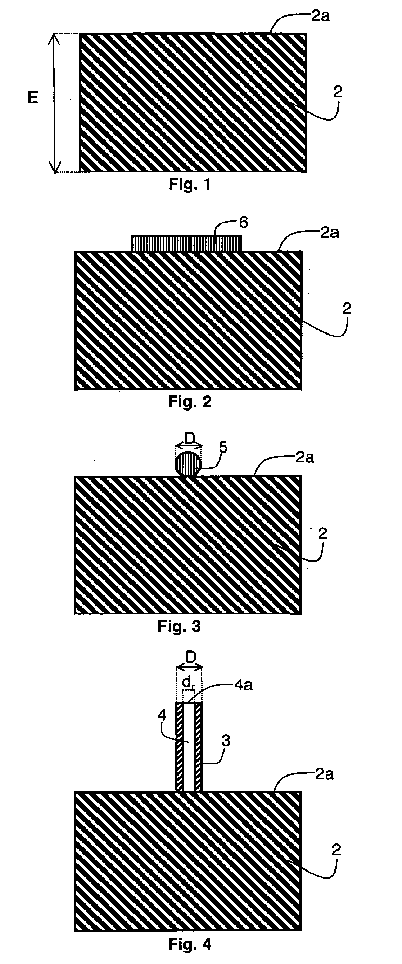

Les figures 1 à 7 représentent, à titre d'exemple, différentes étapes de réalisation d'un mode particulier de réalisation d'un dispositif de séparation 1. Pour des raisons de clarté, le dispositif de séparation représenté sur les figures 1 à 7 et décrit ci-dessous comporte un nanotube et plus précisément un nanotube de carbone. Bien évidemment, les différentes étapes décrites pour la formation d'un seul nanotube sont aisément transposables à la réalisation d'une pluralité de nanotubes de diamètres différents ou identiques.

Le dispositif de séparation 1 est réalisé à partir d'un substrat 2 tel que représenté sur la figure 1. Le substrat 2 est, dans ce mode de réalisation, constitué par un matériau dégradable sous l'action d'un agent chimique. Par exemple, le substrat est constitué par l'oxyde de silicium et l'agent chimique est l'acide fluorhydrique (HF). De plus, la hauteur du canal de circulation étant dépendante de l'épaisseur E du substrat 2, celle-ci est avantageusement comprise entre 5nm et 1mm.

Comme représenté sur les figures 1 à 4, un nanotube de carbone 3 est réalisé, de manière contrôlée, sur la surface libre 2a du substrat 2.

La formation contrôlée du nanotube de carbone 3 consiste notamment à contrôler le diamètre D du nanotube de carbone 3 et, plus particulièrement, le diamètre réel dᵣ (noté ci-après diamètre dᵣ) du canal interne 4 ménagé dans le nanotube 3. Le nanotube de carbone 3 est obtenu de manière contrôlée par voie catalytique, c'est-à-dire à partir d'un grain de catalyseur 5 préalablement formé sur le substrat 2. En effet, le diamètre D du grain de catalyseur 5 utilisé pour faire croître le nanotube est sensiblement égal au diamètre D du nanotube 3, qui est lui-même proportionnel au diamètre dᵣ du canal interne 4. Ainsi, il est possible de contrôler le diamètre dᵣ du canal interne 4 d'un nanotube de carbone 3, en réalisant un grain ou une goutte de catalyseur 5 ayant une taille prédéterminée et maîtrisée, correspondant à celle souhaitée pour le diamètre D du nanotube de carbone 3.

Il existe principalement deux méthodes pour permettre d'obtenir un grain de catalyseur 5 ayant une dimension prédéterminée.

Comme rapportée dans l'article « Novel approach to fabricating carbon nanotube via interconnects using size-controlled catalyst nanoparticles » de Shintaro Sato et al. (International Interconnect Technology Conference, 2006, pages 230-232), une des méthodes consiste à former des particules de catalyseur par ablation laser d'une cible en catalyseur, à sélectionner les particules correspondant à la taille désirée parmi les particules formées et à déposer les particules sélectionnées.

Comme illustrée aux figures 1 à 4, une autre méthode consiste à déposer un film mince de catalyseur 6 sur une zone prédéterminée de la surface libre 2a du substrat 2 (figure 2), puis à réaliser un recuit à haute température.

Le film mince de catalyseur 6 est, par exemple, constitué par un catalyseur choisi parmi le nickel, le fer, le cobalt et un alliage de plusieurs de ces éléments chimiques ou par plusieurs couches distinctes formées chacune d'un catalyseur choisi parmi le nickel, le fer, le cobalt et un alliage de plusieurs de ces éléments chimiques. Il peut être déposé par tout type de moyens connus. Il est, par exemple, déposé par dépôt physique en phase vapeur, par pulvérisation plasma à l'aide d'une cible contenant le catalyseur, par évaporation d'une cible contenant le catalyseur ou par chauffage, en particulier, électronique (bombardement). Comme représenté sur la figure 3, un recuit à haute température est ensuite réalisé pour transformer le film mince en une goutte ou un grain 5. Le recuit du film mince, une fois celui-ci déposé sur le substrat, peut être réalisé par tout moyen de chauffage adapté, tel qu'une résistance, une lampe ou un filament conducteur électrique. La température de recuit est avantageusement comprise entre 400°C et 1000°C et avantageusement entre 400°C et 550°C.

Le diamètre D d'un grain de catalyseur 5 réalisé par dépôt d'un film mince et recuit est maîtrisé en déterminant préalablement les dimensions du film mince 6 initialement déposé, comme indiqué dans l'article « Plasma enhanced chemical vapour deposition carbon nanotubes/nanofibres-how uniform do they grow ? » de K B J Teo et al. (Institute of Physics Publishing, Nanotechnology 14 (2003) 204-211). En effet, le diamètre D dépend non seulement de la hauteur mais également de la largeur du film mince 6 préalablement déposé. Par ailleurs, s'il n'y a pas de diffusion du catalyseur dans le substrat 2, le volume de la goutte 5 correspond au volume initial du film mince 6.

À titre d'exemple, il est possible de former, sur la surface 2a du substrat 2, un film mince 6 en catalyseur, d'une largeur par exemple supérieure à 80nm, à l'aide d'une étape de lithographie peu coûteuse utilisant la raie I du mercure ou un rayonnement UV profond, pour ensuite procéder à la mise en forme par recuit du grain 5 de catalyseur. Ce grain 5 a alors un diamètre D proportionnel à la taille du film mince 6 en catalyseur précédemment déposé. Un film mince d'une largeur de 100nm et d'une hauteur de 3nm permet par exemple d'obtenir un grain ayant un diamètre D de l'ordre de 30nm. Par ailleurs, les dimensions du film mince 6 en catalyseur peuvent, aussi, être ajustées par lithographie, gravure, retrait (ou « stripping »). Elles peuvent aussi être déterminées en déposant, avant le dépôt du film mince en catalyseur, une couche en aluminium sur la partie de la surface libre 2 du substrat 2 destinée à ne pas être recouverte par le film mince 6. Ces techniques sont, avantageusement utilisées lorsque le dispositif comporte une pluralité de nanotubes. Lorsqu'un seul nanotube de carbone 3 est formé sur la surface libre 2a du substrat 2, le film mince 6 en catalyseur est avantageusement de forme cylindrique, avec un diamètre inférieur à 150nm.

Comme représentée sur la figure 4, la formation du grain de catalyseur 5 est suivie d'une étape de croissance du nanotube de carbone 3 dans lequel est ménagé le canal interne 4. La croissance est avantageusement réalisée par dépôt chimique en phase vapeur (CVD) ou par dépôt chimique en phase vapeur assisté par plasma (PECVD), notamment un plasma radiofréquence ou micro-onde. À la fin de l'étape de croissance, le catalyseur, préalablement disposé sur la surface libre 2a du substrat 2, se retrouve en général à l'extrémité libre du nanotube de carbone (« tip growth »), avant d'être éliminé pour libérer l'extrémité libre du nanotube et donc l'ouverture 4a du canal interne 4. Le catalyseur peut, par exemple, être dissous par une étape de traitement chimique avec HNO₃.

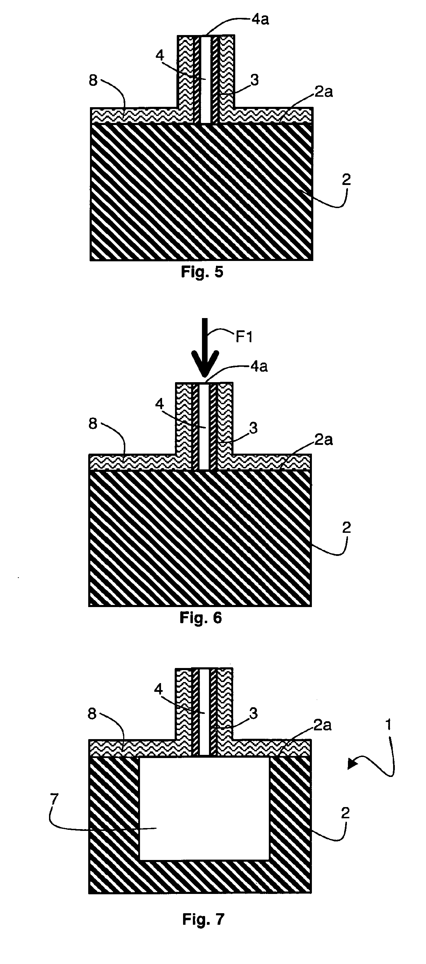

Une fois le nanotube de carbone 3 formé sur la surface libre 2a du substrat 2, le canal de circulation 7 est réalisé comme représenté sur les figures 5 à 7, à l'aide d'un agent chimique (par exemple l'acide fluorhydrique) permettant de dégrader sélectivement une zone prédéterminée du substrat 2.

Une couche mince 8, imperméable à l'agent chimique, est préalablement déposée sur la totalité de la surface libre 2a du substrat 2 et sur les parois du nanotube de carbone 3, afin de les protéger de l'agent chimique. De plus, la couche mince 8 ne doit pas obturer l'ouverture 4a du canal interne 4 du nanotube de carbone 3. Une étape de polissage mécano-chimique peut par exemple être réalisée avant la formation du canal de circulation 7 afin de libérer l'ouverture 4a du canal interne 4 si celui-ci est obstrué ou bien pour raccourcir le nanotube 3.

Comme représenté par la flèche F1 sur la figure 6, l'agent chimique est ensuite introduit, par l'ouverture 4a, dans le canal interne 4 du nanotube 3 pour entrer en contact de manière très localisée avec le substrat 2 et dégrader sélectivement une zone prédéterminée du substrat 2 disposée sous le nanotube et destinée à former le canal de circulation 7 (figure 7). L'introduction d'un agent chimique dans le canal interne d'un nanotube de carbone afin de dégrader sélectivement une zone d'un substrat en matériau dégradable a été précédemment décrite dans la demande de brevet français n° 0703487 déposée le 15/05/2007 pour fabriquer des cavités d'air dans une couche cible, destinées à être intégrées dans une structure d'interconnexion métallique.

La couche mince 8 imperméable à l'agent chimique peut être avantageusement conservée sur la surface libre 2a du substrat 2 et sur la surface libre du nanotube 3.

Un procédé de fabrication tel que représenté sur les figures 1 à 7 présente l'avantage d'être facile à mettre en oeuvre et il se révèle peu coûteux, ce qui permet une industrialisation viable. En effet, le procédé permet d'obtenir simplement au moins un canal de dimension nanométrique (canal interne d'un nanotube) débouchant automatiquement sur un canal de circulation, par exemple de largeur micrométrique, sans nécessiter plusieurs étapes délicates et fastidieuses de lithographie, gravure... Dans l'art antérieur, pour obtenir un contrôle dimensionnel précis de motifs de l'ordre de la dizaine de nanomètres, des méthodes de lithographie coûteuses doivent être mises en place. Or, selon l'invention, la taille du ou des canaux internes est contrôlée et déterminée par la taille du grain de catalyseur de départ, en utilisant éventuellement une étape de la lithographie ne nécessitant pas de mise au point car elle est déjà utilisée de manière industrielle. De plus, ce procédé est réalisé à une température relativement faible, notamment par rapport au procédé selon l'art antérieur permettant d'obtenir une membrane nanoporeuse.

Enfin, un tel procédé permet également de réaliser de manière très simple, reproductible et contrôlée, un dispositif de séparation comportant plusieurs nanotubes. Ainsi, lorsque plusieurs nanotubes sont formés à la surface 2a du substrat 2, l'agent chimique est introduit dans les différents canaux internes des nanotubes et dégrade sélectivement des zones du substrat 2, avantageusement sous forme de cavités qui se rejoignent deux à deux pour former le canal de circulation. Les éventuels orifices d'entrée et/ou sortie du canal de circulation peuvent aussi être réalisés à l'aide de l'agent chimique introduit dans un nanotube proche d'une paroi latérale du substrat. L'agent chimique dégrade alors sélectivement une zone de ladite paroi latérale pour former un orifice. Les éventuels orifices peuvent aussi être réalisés mécaniquement, par lithographie et gravure ou par clivage.

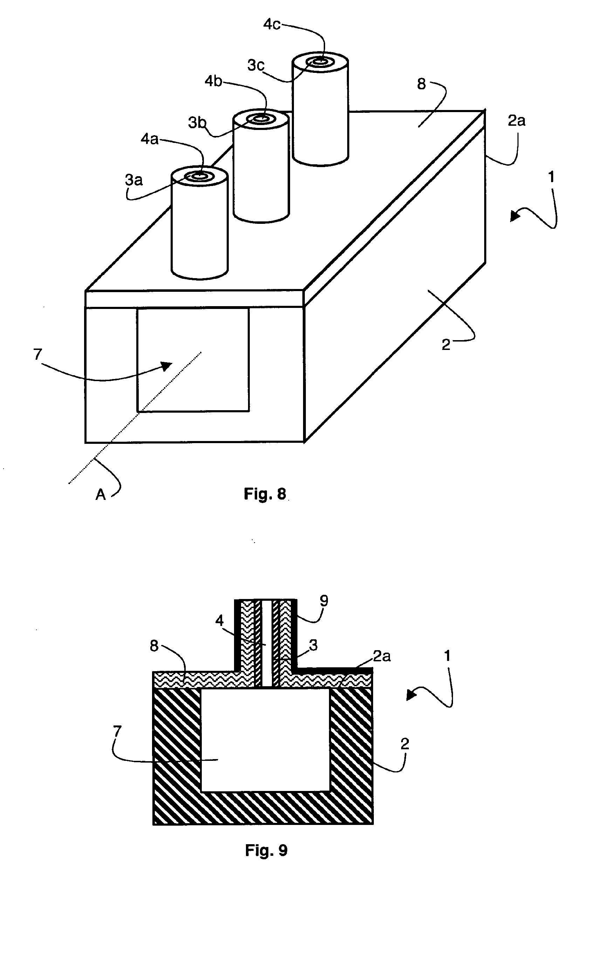

À titre d'exemple, le dispositif de séparation peut comporter plusieurs nanotubes permettant de séparer une même molécule. Ces nanotubes forment alors une série de nanotubes associée à une molécule prédéterminée. Sur la figure 8, le dispositif de séparation 1 comporte, par exemple, une série de trois nanotubes de carbone 3a, 3b, 3c identiques, formés sur la surface libre 2a du substrat 2 et recouverts, comme la surface libre 2a, par le matériau imperméable à l'agent chimique. Les nanotubes 3a, 3b, 3c comportent chacun un canal interne 4a, 4b, 4c, débouchant dans le canal de circulation 7 et les canaux internes 4a, 4b, 4c ont tous le même diamètre dᵣ. La disposition des nanotubes 3a, 3b et 3c est, en particulier, telle que les points d'intersection respectif de leurs axes de symétrie avec le plan de la surface libre de la couche mince 8 sont alignés selon un axe parallèle à l'axe longitudinal A du canal de circulation 7. Une telle disposition de nanotubes de carbone forme un cas particulier d'un assemblage en parallèle, car tous les nanotubes de la même série débouchent dans le même canal de circulation 7.

Dans le cas des nanotubes de carbone, ceux-ci étant conducteurs électriquement, ils peuvent, avantageusement, être soumis à un potentiel électrique (signal d'adresse), afin de créer des vannes moléculaires. La figure 9 représente un dispositif de séparation 1 avec un nanotube de carbone 3 recouvert en partie d'un matériau conducteur électriquement tel que l'or, le nitrure de titane, le palladium, le platine, le fer ou l'aluminium. Ainsi, un nanotube de carbone 3 est au moins en partie recouvert par un matériau conducteur électriquement 9. De plus, sur la figure 9, la surface libre du nanotube de carbone 3 est préalablement recouverte d'une couche mince 8 en matériau imperméable à l'agent chimique, ladite couche étant utilisée lors de la réalisation du canal de circulation 7. Ainsi, le matériau 9 conducteur électriquement est disposé, dans ce mode de réalisation, sur la couche mince 8 en matériau imperméable à l'agent chimique. Le matériau conducteur électriquement 9 peut être déposé tout autour du nanotube de carbone 3 revêtu préalablement par la couche mince 8 en matériau imperméable à l'agent chimique ou bien sur une partie seulement.

Le revêtement d'au moins une partie du nanotube de carbone 3 par un matériau électriquement conducteur 9 permet d'agir de façon électrostatique sur le passage ou non de molécules et ainsi obtenir des vannes moléculaires. Un tel matériau conducteur électriquement 9 permet, ainsi, de réaliser une connexion électrique autour d'au moins un canal interne 4 afin de contrôler le passage de molécules à la façon d'un transistor biologique.

Par ailleurs, le dispositif de séparation 1 peut également comporter des nanotubes ayant des canaux internes de dimensions différentes, ce qui permet de faire plusieurs séparations en séquence. Par exemple, un mélange des protéines de taille croissante ou décroissante peut être extrait séquentiellement. Le procédé de fabrication du dispositif de séparation peut, alors, nécessiter une ou plusieurs étapes de lithographie, mais ces étapes de lithographie restent des étapes à relativement basse résolution, car les nanotubes sont réalisés à partir de films minces en catalyseur mis en forme de gouttes lors du recuit.

Le dispositif de séparation peut également comporter plusieurs séries distinctes de nanotubes. Par séries distinctes, on entend que chaque série comporte plusieurs nanotubes ayant des canaux internes de même diamètre dᵣ et que le diamètre dᵣ des canaux internes d'une première série de nanotubes est différent de celui des canaux internes d'une seconde série de nanotubes. La différence entre les diamètres est avantageusement au moins égale à 2nm.

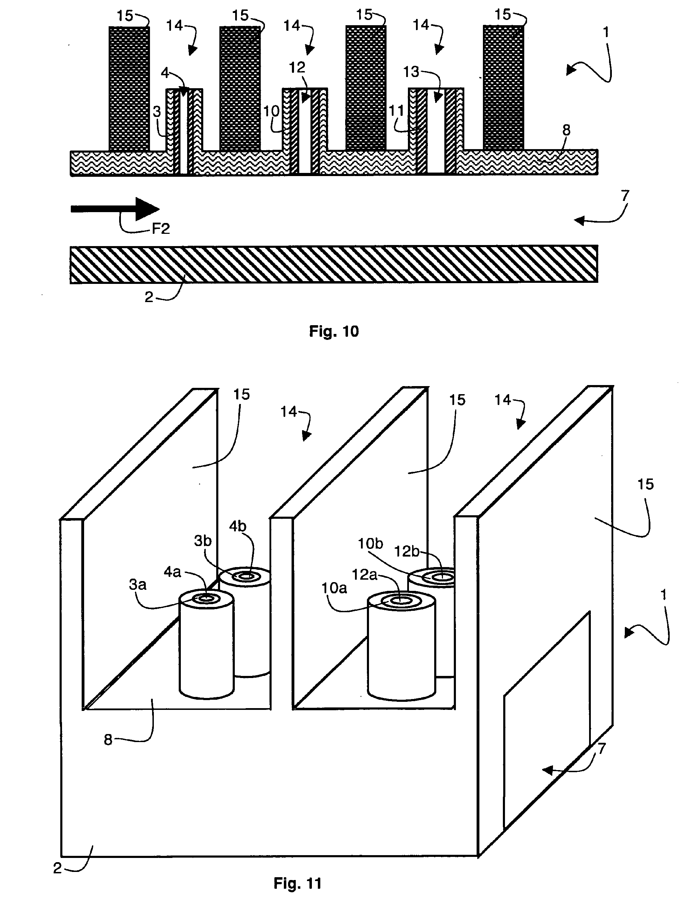

À titre d'exemple, sur la figure 10, un dispositif de séparation 1 comporte trois séries de nanotubes de carbone 3, 10, 11 ayant des canaux internes 4, 12, 13 de trois diamètres dᵣ différents et débouchant dans un même canal de circulation 7. Chaque série de nanotubes de carbone est associée à une molécule prédéterminée à séparer ou à extraire. Ainsi, le diamètre efficace des canaux internes d'une série particulière est supérieur au diamètre hydrodynamique de la molécule correspondante. De plus, les canaux internes d'une série particulière ne doivent pas laisser passer des molécules ayant un diamètre hydrodynamique supérieur à celui de la molécule associée à la série. Ainsi, le diamètre efficace des canaux internes d'une série particulière est inférieur au diamètre hydrodynamique de la plus petite des molécules ayant un diamètre hydrodynamique supérieur au diamètre hydrodynamique de la molécule associée à ladite série.

Par ailleurs, comme représenté sur la figure 10, les séries de nanotubes sont disposées par ordre croissant en fonction du diamètre dᵣ de leurs canaux internes, selon l'axe de circulation de l'échantillon liquide dans le canal de circulation (flèche F2). Sur la figure 10, si l'échantillon liquide comporte trois molécules de diamètres hydrodynamiques différents à extraire, la molécule de plus petit diamètre hydrodynamique sera extraite par la série de nanotubes 3, la molécule de diamètre hydrodynamique intermédiaire sera extraite par la série de nanotubes 10 et la molécule de plus grand diamètre hydrodynamique sera extraite par la série de nanotube 11 disposée en aval du canal de circulation 7.

De plus, sur la figure 10, chaque série de nanotubes peut également être disposée dans une rainure externe 14 délimitée par la surface libre de la couche mince 8 en matériau imperméable à l'agent chimique et par des parois latérales 15 préalablement formées sur ladite couche imperméable 8. Une telle rainure 14 peut former un canal de circulation supplémentaire. Comme précisé plus haut, le diamètre D d'un grain de catalyseur peut dépendre de la hauteur et de la largeur du film mince 6 déposé. La largeur du film mince déposé est délimité par la distance qui sépare deux parois latérales 15. De ce fait, la largeur de la rainure externe 14, qui est égale à la distance entre deux parois latérales 15 adjacentes, peut être utilisé pour définir le diamètre interne des nanotubes correspondants.

De même, la figure 11 représente deux séries de nanotubes 3a, 3b et 10a, 10b comportant des canaux internes 4a, 4b et 12a, 12b comportant chacun un orifice débouchant dans un même canal de circulation 7. Trois parois latérales 15 sont disposées parallèlement, sur la surface libre de la couche mince 8 en matériau imperméable à l'agent chimique. Elles sont, de plus, disposées dans des plans disposés dans une direction perpendiculaire à l'axe de circulation dans le canal de circulation 7. Deux parois latérales 15 adjacentes délimitent ainsi avec la surface libre de la couche mince 8, une rainure 14 dans laquelle est disposée une série de nanotubes 3a, 3b ou 10a, 10b. Les parois 15 peuvent être réalisées avant la formation des nanotubes afin de délimiter des séries distinctes de films minces 6 en catalyseur utilisés pour former les nanotubes. Les parois latérales 15 sont, par exemple, constituées par un matériau biocompatible, tel que le PMMA. Ainsi, dans un tel dispositif, les rainures 14 forment également des canaux de circulation. Lorsque les parois latérales sont formées avant le dépôt du film mince 6 et donc avant la croissance des nanotubes, la distance qui séparent les parois 15 permet de définir le diamètre D du grain de catalyseur et donc le diamètre du nanotube. De ce fait, il est possible avantageusement de lier le diamètre du nanotube à la distance qui sépare les murs 15. Il en résulte alors d'avoir une séparation en taille de la molécule de l'échantillon liquide selon la distance entre les murs 15

Dans les dispositifs de séparation représentés sur les figures 10 et 11, l'échantillon liquide contenant les molécules à séparer peut circuler dans les rainures 14 ou dans le canal de circulation 7. À titre d'exemple, dans le dispositif de séparation représenté sur la figure 11, l'échantillon liquide peut circuler dans le canal de circulation 7, puis les différentes molécules à séparer sont triées et séparées à des endroits différents suivant leur diamètre hydrodynamique et leur encombrement pour être, ensuite, récupérées une fois triées à la sortie des canaux internes 4, 12 des nanotubes de carbone 3, 10 dans les rainures 14.

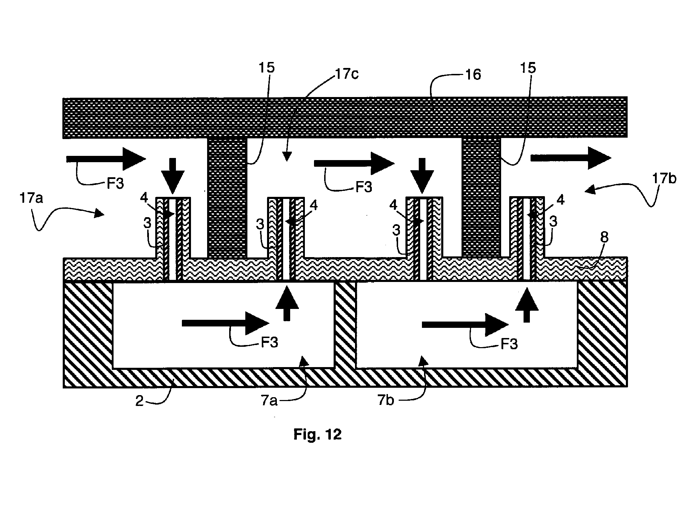

Comme illustré par un autre mode de réalisation représenté sur la figure 12, les nanotubes d'une série peuvent aussi former un assemblage en série, afin d'augmenter la pureté de la molécule extraite. Dans un tel assemblage en série, plusieurs canaux de circulation sont connectés en série par l'intermédiaire des canaux internes de nanotubes de même diamètre dᵣ. À titre d'exemple, sur la figure 12, cinq canaux de circulation sont connectés en série par l'intermédiaire de quatre canaux internes 4 de nanotubes 3, formés sur la surface 2a du substrat 2. Les cinq canaux de circulation sont constitués par des premier et second canaux de circulation 7a et 7b ménagés dans le substrat 2 et par trois canaux supplémentaires ménagés au-dessus dudit substrat 2. Ainsi, deux parois latérales 15 délimitent, avec la surface libre de la couche mince 8 en matériau imperméable à l'agent chimique et une paroi supérieure 16, deux canaux de circulation supplémentaires 17a et 17b périphériques et un canal de circulation supplémentaire 17c intermédiaire. Deux nanotubes 3 débouchant respectivement dans les premier et second canaux de circulation 7a et 7b sont respectivement disposés dans les canaux de circulation périphériques 17a et 17b. De plus, le canal de circulation intermédiaire 17c comporte deux nanotubes débouchant respectivement dans les premier et second canaux de circulation 7a et 7b. Les flèches F3 indiquent, sur la figure 12, le sens de circulation d'un échantillon liquide dans un tel dispositif de séparation.

Plusieurs dispositifs de séparation, qu'ils soient simples ou multiples, peuvent, aussi, être associés pour affiner le procédé de séparation. Par ailleurs, les différents modes de réalisation décrits ci-dessus peuvent être associés. Ainsi, le mode de réalisation représenté sur la figure 9 peut être associé au mode de réalisation représenté sur la figure 10 ou sur la figure 11. Dans ce cas, certains nanotubes peuvent être préalablement polis, avant d'être en partie recouvert d'une électrode polarisable.

Un dispositif de séparation selon l'invention peut avantageusement être utilisé comme membrane de dialyse, pour la séparation de protéines pour la biologie ou la chimie analytique.

Les nanotubes peuvent également être des nanotubes d'un matériau choisi parmi TiO₂, BN, MoS, WS, CUS, NiCl₂, CdCl, Cdl, AsS, AlSiGeO et les oxydes de métaux, dans la mesure où le matériau est compatible avec l'agent chimique utilisé pour dégrader sélectivement le substrat.

Il n'est pas obligatoire que le catalyseur qui obture au moins partiellement l'extrémité supérieure des nanotubes soit éliminée. En effet, les parois des nanotubes ne sont pas obligatoirement étanches et il est possible que les molécules passent par exemple par les plans de graphène d'un nanotube de carbone.

## Revendications

1. Dispositif de séparation (1) d'au moins une molécule d'un échantillon liquide contenant ladite molécule à séparer et au moins une molécule additionnelle ayant un diamètre hydrodynamique supérieur au diamètre hydrodynamique de la molécule à séparer,
**caractérisé en ce que** le dispositif (1) comporte :
- un substrat (2),
- au moins un canal de circulation (7) ménagé dans ledit substrat (2)
- et au moins un nanotube (3, 3a, 3b, 3c, 10, 10a, 10b, 12) associé à ladite molécule à séparer et formé sur une surface libre (2a) du substrat (2), ledit nanotube comprenant un canal interne (4, 4a, 4b, 4c, 12, 12a, 12b, 13), débouchant dans ledit canal de circulation (7) et présentant un diamètre efficace (de) prédéterminé, supérieur au diamètre hydrodynamique de la molécule à séparer et inférieur au diamètre hydrodynamique de la molécule additionnelle.

2. Dispositif selon la revendication 1, **caractérisé en ce que** le nanotube (3) est un nanotube d'un matériau choisi parmi le carbone, TiO₂, BN, MoS, WS, CUS, NiCl₂, CdCl, Cdl, AsS, AISiGeO et les oxydes de métaux.

3. Dispositif selon l'une des revendications 1 et 2, **caractérisé en ce qu'**il comporte une pluralité de nanotubes (3, 10, 11), formés sur la surface libre (2a) du substrat (2) et respectivement associés à une pluralité de molécules à séparer distinctes, les canaux internes (4, 12, 13) desdits nanotubes étant disposés par ordre croissant en fonction de leur diamètre efficace (de), selon l'axe de circulation de l'échantillon liquide dans le canal de circulation (7).

4. Dispositif selon l'une des revendications 1 et 2, **caractérisé en ce qu'**il comporte au moins une série de nanotubes (3a, 3b, 3c et 10a, 10b) comportant des canaux internes (4a, 4b, 4c et 12a, 12b), de diamètres efficaces (de) identiques et associés à ladite molécule à séparer.

5. Dispositif selon la revendication 4, **caractérisé en ce que** la série de nanotubes (3a, 3b, 3c et 10a, 10b) est disposée entre des parois latérales (15) délimitant une rainure externe (14).

6. Dispositif selon la revendication 5, **caractérisé en ce que** le diamètre interne de la série de nanotubes est lié à une distance séparant les parois externes (15) de la rainure externe (14) correspondante.

7. Dispositif selon l'une quelconque des revendications 3 à 6, **caractérisé en ce que** les canaux internes (4, 12, 13) comportent chacun un orifice débouchant dans un même canal de circulation (7).

8. Dispositif selon l'une quelconque des revendications 4 à 7, **caractérisé en ce qu'**il comporte une pluralité de séries de nanotubes (3a, 3b, 3c et 10a, 10b), lesdites séries étant respectivement associées à une pluralité de molécules à séparer distinctes et disposées par ordre croissant en fonction de leur diamètre efficace (de), selon l'axe de circulation de l'échantillon liquide dans le canal de circulation (7).

9. Dispositif selon l'une quelconque des revendications 3 à 6, **caractérisé en ce qu'**il comporte une paroi supérieure (16) délimitant, au moyen des parois latérales (15), des canaux de circulation supplémentaire (17), une pluralité de canaux de circulation (7a, 7b) et de canaux de circulation supplémentaires (17a, 17b, 17c) étant connectés en série par l'intermédiaire des canaux internes d'une série de nanotubes.

10. Dispositif selon l'une quelconque des revendications 1 à 9, **caractérisé en ce qu'**au moins un nanotube (3, 3a, 3b, 3c, 10, 10a, 10b, 12) est au moins en partie recouvert par un matériau conducteur électriquement (9).

11. Procédé de fabrication d'un dispositif de séparation (1) d'au moins une molécule d'un échantillon liquide contenant ladite molécule à séparer et au moins une molécule additionnelle ayant un diamètre hydrodynamique supérieur au diamètre hydrodynamique de la molécule à séparer, **caractérisé en ce que** le procédé comporte les étapes successives suivantes :
- formation contrôlée d'au moins un nanotube (3, 3a, 3b, 3c, 10, 10a, 10b, 12) associé à ladite molécule à séparer, sur la surface libre (2a) d'un substrat (2) constitué par un matériau dégradable sous l'action d'un agent chimique, ledit nanotube (3, 3a, 3b, 3c, 10, 10a, 10b, 12) comprenant un canal interne (4, 4a, 4b, 4c, 12, 12a, 12b, 13) présentant un diamètre efficace (de) prédéterminé, supérieur au diamètre hydrodynamique de la molécule à séparer et inférieur au diamètre hydrodynamique de la molécule additionnelle,
- formation, sur la surface libre (2a) du substrat (2) et sur la surface libre dudit nanotube (3, 3a, 3b, 3c, 10, 10a, 10b, 12), d'une couche mince (8) en matériau imperméable à l'agent chimique
- et introduction de l'agent chimique dans le canal interne (4, 4a, 4b, 4c, 12, 12a, 12b, 13) du nanotube (3, 3a, 3b, 3c, 10, 10a, 10b, 12) et dégradation sélective d'une zone prédéterminée du substrat (2) pour former un canal de circulation (7).

12. Procédé selon la revendication 11, **caractérisé en ce que** le substrat (2) étant en oxyde de silicium, l'agent chimique est l'acide fluorhydrique.

13. Procédé selon l'une des revendications 11 et 12, **caractérisé en ce que** la formation contrôlée du nanotube (3, 3a, 3b, 3c, 10, 10a, 10b, 12) est réalisée en formant, sur la surface libre (2a) du substrat (2), une goutte (5) de catalyseur ayant un diamètre (D) prédéterminé, proportionnel au diamètre efficace (de) du canal interne (4, 4a, 4b, 4c, 12, 12a, 12b, 13) et en réalisant à partir de ladite goutte (5), une croissance du nanotube (3, 3a, 3b, 3c, 10, 10a, 10b, 12) par dépôt chimique en phase vapeur ou par dépôt chimique en phase vapeur assisté par plasma.

14. Procédé selon l'une quelconque des revendications 11 à 13, **caractérisé en ce qu'**une étape de polissage mécano-chimique est réalisée avant l'introduction de l'agent chimique dans le canal interne (4, 4a, 4b, 4c, 12, 12a, 12b, 13).
